# EUROPEAN PATENT APPLICATION

(11) **EP 1 505 487 A2**
(43) Date of publication of application: **09.02.2005**
(21) Application number: 04253333.1
(22) Date of filing: 04.06.2004
(51) Int. Cl.: G06F 3/06

(54) **Storage drive having universal format across media types**

(30) Priority: 04.06.2003 US 475944 P; 28.05.2004 US 856970 P
(71) Applicant: QUANTUM CORPORATION, San Jose, California 95110 (US)
(72) Inventor: Saliba, George, Northborough Massachusetts 01532 (US)
(74) Representative: Charig, Raymond Julian

(57) **Abstract**

A universal format storage drive includes a first storage unit for storing tablets on a first storage medium, and a second storage unit for storing tablets on a second storage medium. The first and second storage units may have different access times, and the first and second media may be of different types. Tablets on the first and second storage media may be the same size and have the same format. A policy processor causes the transfer of a first tablet from the first storage unit to the second storage unit for storage on the second storage medium. The first tablet is transferred to the second storage unit and stored in the second storage medium without reformatting the first tablet. In particular, the first tablet may, in compressed form, be stored on the first storage medium and transferred to the second storage unit for storage on the second storage medium without decompression during any of the storage or transfer operations.

## Description

### CROSS-REFERENCE TO RELATED APPLICATION

This application claims the benefit of U.S. application no. 60/475,944, "Storage Drive Having Universal Format Across Media Types," filed June 4, 2003 which is incorporated herein in its entirety by reference.

### BACKGROUND OF THE INVENTION

### 1. Field of the Invention

The present invention generally relates to the storage in and transfer of data among different media types, and, in particular, to a storage drive that creates a universal data format across media types, thereby allowing the data to be stored in and transferred among the different media types without reformatting.

### 2. Related Art

Data can be stored in various types of storage media in different formats. For example, in a conventional format for storing data on a hard disk, the surface of a hard disk platter is divided into a number of tracks and sectors. A track corresponds to a single circular portion of the platter. A sector corresponds to a portion of a track. The data to be stored on the hard disk is divided into pieces such that a single piece can be stored within a single sector. The logical connection between the pieces of the data and the corresponding disk sectors is maintained in a directory. However, over time, as the data is repeatedly read, modified and written to the hard disk, the sectors corresponding to a single file can become scattered over the hard disk. This effect is commonly known as fragmentation, which can produce data access delays.

In a conventional format for storing data on magnetic tape, data is written serially in tracks on the tape. New data or files are appended at the end of previously written data or files, but not elsewhere. This leads to data storage inefficiency and data modification limitations.

Moreover, data may be stored in and transferred among different storage devices, such as a disk drive and a tape drive, depending on factors such as the access history of the data. For example, frequently accessed files may be kept on disk, whereas less frequently used files may be moved from disk to tape, which has a slower access time. In this manner, the disk acts as a cache with respect to the tape.

As described above, however, data is stored on tape in a format different from that of data stored on disk. For example, in conventional systems the host operating system uses a directory to locate the fragmented pieces on disk comprising a file. The host reassembles the pieces into file format before providing the data to a tape drive or before transferring the data over a network to another host where the data would again be reformatted by a storage drive attached to that host for storage according to the formatting requirements of the storage drive. All these operations, of course, add to the time it takes for data to be transferred among storage devices attached to the same host or for a host to access data associated with another host, and wastes valuable host processing and network resources.

### SUMMARY OF THE INVENTION

The present invention provides a universal format storage drive. The universal drive includes a first storage unit for storing tablets on a first storage medium, and a second storage unit for storing tablets on a second storage medium. The first and second storage units may have different access times, and the first and second media may be of different types. Tablets on the first and second storage media may be the same size and have the same format. A policy processor causes the transfer of a first tablet from the first storage unit to the second storage unit for storage on the second storage medium. The first tablet is transferred to the second storage unit and stored in the second storage medium without reformatting the first tablet. In particular, the first tablet may, in compressed form, be stored on the first storage medium and transferred to the second storage unit for storage on the second storage medium without decompression during any of the storage or transfer operations.

Regardless of the similarities or differences in tablet format and size, the policy processor may convert data, received from a host, to one or more tablets in a tablet format for storage on either the first or second storage medium. The one or more tablets may be stored on either the first or second storage medium depending on the access time of the corresponding storage unit. The host may direct storage of the tablet depending on those conditions, by sending a command to the policy processor, in one embodiment.

After storage of the first tablet on the second storage medium, the first tablet also may remain stored on the first storage medium.

The first storage unit may have a faster access time than the second storage unit, and the first tablet may be a least recently used tablet on the first storage unit. For example, the first storage unit may be a disk drive and the first storage medium a disk, and the second storage unit may be a tape drive and the second storage medium a tape. The first tablet may be a least recently used tablet on the disk drive. Alternatively, for example, the first storage medium may be a solid state memory and the second storage medium a disk.

Whether working only with a tape drive or also in combination with other storage units, the policy processor may cause the tape drive to move a tablet located at a first region on the tape to a second region of the same size on the tape. The policy processor may cause the tape drive to move at least two infrequently used tablets on the tape to a first region on the tape.

Each tablet may be formatted as a tape, in which case a tape storing tablets emulates a tape library. Alternatively, a disk storing such tablets also emulates a tape library.

In another embodiment, a universal format storage drive may comprise a first storage unit for storing tablets on a first storage medium, and a second storage unit for storing tablets on a second storage medium. The first and second storage units may have different access times, and the first and second media may be of different types. Each tablet on the first storage medium has a first size, each tablet on the second storage medium has a second size different from the first size, and tablets on the first storage medium have the same format as tablets on the second storage medium except for level of data protection. The first tablet, when stored on the first medium, may, in fact, have no data protection. A policy processor causes the transfer of a first tablet from the first storage unit to the second storage unit for storage on the second storage medium. The policy processor may add error correction coding to the first tablet for storage on the second storage medium.

In yet another embodiment, a universal format storage drive may comprise a first storage unit for storing first tablets including data on a first storage medium, and a second storage unit for storing second tablets on a second storage medium. The first and second storage units may be of different types. The second tablets may include data protection but not data. Each tablet on the first and second storage media may have a first size and a second size, respectively, and the first size may be larger than the second size. The second storage unit may have a slower access time than the first storage unit. A policy processor accesses a second tablet corresponding to a first tablet upon detection of an error in the first tablet.

### BRIEF DESCRIPTION OF THE DRAWINGS

Figure 1 illustrates a universal format storage drive according to an embodiment of the present invention.

Figure 2 illustrates a tablet format according to an embodiment of the present invention.

Figure 3 illustrates a data format according to an embodiment of the present invention.

### DETAILED DESCRIPTION OF EXEMPLARY EMBODIMENTS

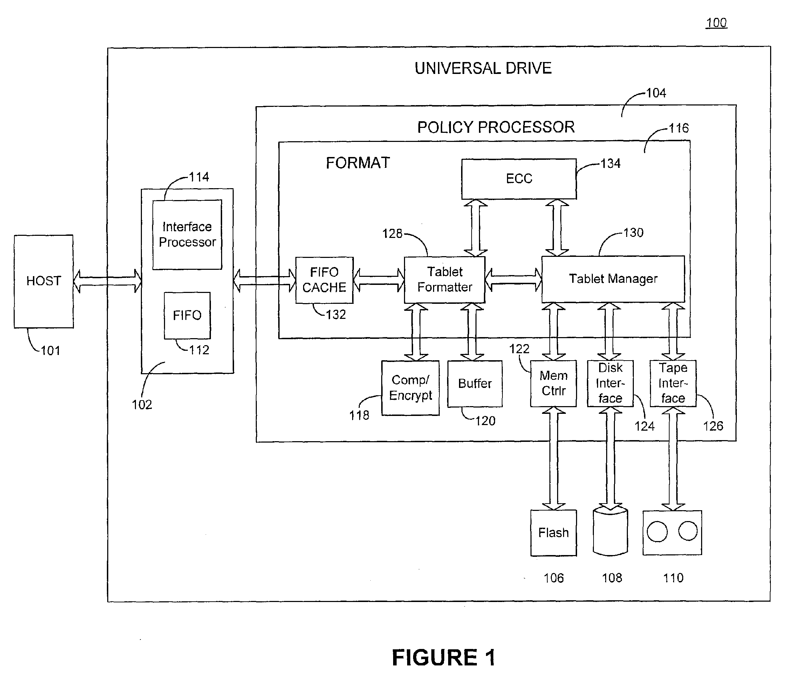

Figure 1 illustrates an exemplary universal format storage drive 100 of the present invention coupled to a host 101 (which may be a computer, a network, etc.). The universal format storage drive 100 includes a host interface 102, a policy processor 104, and individual data storage units 106, 108, 110. The host interface 102 may be, for example, a fiber channel or SCSI interface, and includes a host interface FIFO 112 and a host interface processor 114. In this example, the policy processor 104 includes a format engine 116, a data compression/encryption engine 118, a data buffer 120, a memory controller 122, a disk interface 124 and a tape interface 126. The format engine includes a tablet formatter 128, a tablet manager 130, a semiconductor FIFO cache memory 132, and an error correction code ("ECC") engine 134.

A storage unit includes, for example, a tape drive, rotatable media drive (e.g., hard or optical disk, DVD, holographic storage) or long-term solid state memory (e.g., flash), but does not include short-term, small solid state cache memory, such as a cache of the type typically incorporated into a host computer memory or a tape drive, disk drive or similar storage unit. In the example of Figure 1, the storage units include a solid state memory 106 (e.g., flash), a disk drive 108 and a magnetic tape drive 110. Because the format manager performs policy and formatting functions, however, the magnetic tape drive employed by the invention need not include the electronics to perform those functions, which are typically associated with a conventional tape drive. Instead the tape drive employed by the invention needs only electronics such as the servo controller and read/write channels found in a typical tape drive. The memory controller 122, disk interface 124 and tape interface 126 allow the policy processor 104 to communicate with the solid state memory 106 (e.g., flash), the hard disk drive 108 and the magnetic tape drive 110, respectively. Those skilled in the art will recognize that the invention may employ any number or combination of storage units (including the same or different types of storage media, including media libraries) in which all or any subset of such devices may operate at the same or different memory access speeds.

The tablet manager 130 of the invention structures the data according to a common (or "universal") format in the form of a "tablet." Each storage medium may hold multiple tablets. The tablet manager 130 stores and transfers the tablets in this common format among the various storage media (e.g., the memory, the hard disk and the tape). Thus, unlike the prior art, the universal format storage drive of the invention does not need to reformat the data for transfer among different storage media.

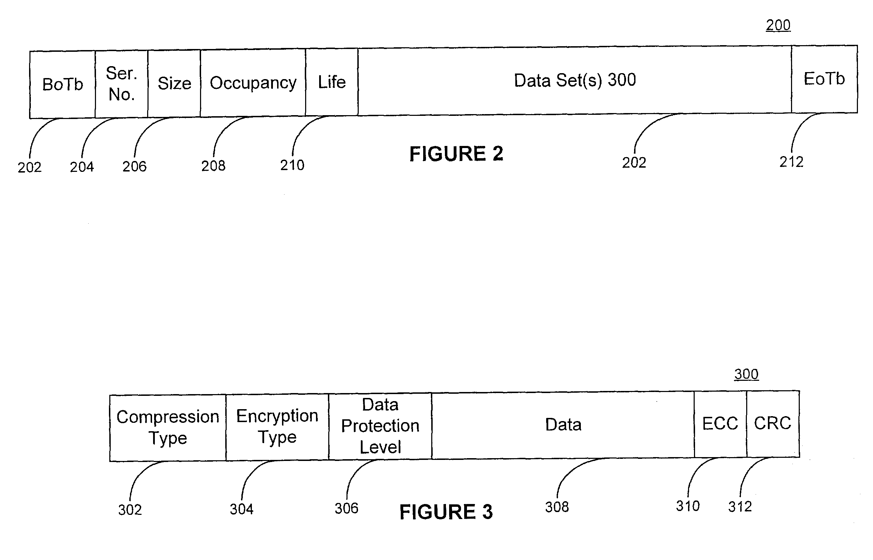

According to one embodiment, each tablet has a fixed size and comprises data from one or more files. Conversely, in another embodiment, each tablet may store a portion of data from a file, so that the file data is spread over multiple tablets. As shown in Figure 2, in addition to a tablet data field 202 comprised of a number of data sets 300, the tablet 200 carries its own overhead. The overhead may include, for example, a beginning of tablet ("BoTb") field 202, a serial number field 204 identifying the tablet, a size field 206 specifying the length of the tablet, an occupancy field 208 indicating the percentage of the data field of the tablet that is occupied by data, a life span field 210 relating to a predefined life span of the tablet, and an end of tablet ("EoTb") field 212.

The fields other than the data field may be referred to as tablet control fields. As shown in Figure 3, each data set 300 may be individually formatted according to a data format to include, for example, a compression field 302 indicating the type of compression algorithm applied to the data, an encryption field 304 indicating the type of encryption applied to the data, a data protection level field 306 indicating the level of data protection, a data field 308 comprising data from one or more files, an ECC field 310 containing error correction codes, and a checksum field 312 containing a checksum (e.g., CRC). Because a tablet (e.g., each data set in the tablet) may essentially be formatted as a tape, each tablet may be considered as a emulating a tape cartridge, so that the storage unit (whether tape, disk or other storage unit) storing the tablets emulates a tape library. Similarly, if the tablets are formatted as another medium, a storage unit storing the tablets emulates a library of that other medium.

As an example of a write operation, the host 101 may send files for storage to the universal format storage drive 100. The file data is cached in the host interface FIFO 112 according to known techniques. The host interface processor 114 implements a handshake protocol between the host 101 and the universal format storage drive 100, and controls the communication of data between the host and the FIFO cache 132 of the policy processor 104 through the host interface FIFO 112.

The format engine 116 transfers the file data to the tablet formatter from the FIFO cache 132. The tablet formatter 128 temporarily stores the arriving data in its buffer 120, and assembles the data together. The size of the tablet may be defined by the host or preset by the drive designer, and may be determined based upon a number of factors, including the average size of a file, storage efficiency (e.g., a larger tablet size reduces the relative size of the fixed overhead) and performance (e.g., a smaller tablet size can be moved and operated upon more quickly). A typical tablet may include approximately 100MB of data, although any size tablet is possible.

The ECC engine 134 generates error correction codes for the tablet data. The tablet formatter 128 may employ the compression/encryption engine 118 to compress and encrypt the tablet data. Based in part on these operations, the tablet formatter 128 writes the overhead fields of the tablet, as shown in Figure 2. Those skilled in the art will recognize that each overhead field (except for the BoTb and EoTb fields) may generally occupy any position within the tablet.

The tablet formatter 128 assigns a serial number to each tablet. The host 101, which typically operates according to a file format, keeps track of the file location with respect to the tablet serial number. For example, a file may be specified by the number(s) of the tablet(s) in which it resides and the known starting byte location and ending byte location (or file size) of the file within the tablet. The tablet manager 130 maintains an inventory of the tablets within the attached storage devices. For example, the inventory may be stored in a local directory in each storage unit, listing by serial number the order of the tablets stored on the associated storage medium. Alternatively, for example, the local directory may be located near the beginning of the tape in a tape cartridge. Because each tablet, in one embodiment, has the same size, this inventory provides a correspondence between tablet number and physical location on the storage medium. Upon power-up of the universal format storage drive, the tablet manager 130 reads the inventory from the local directories to determine the physical location of the tablets on the associated media.

In one embodiment, the tablet manager 130 stores a tablet in the fastest available storage medium (e.g., flash memory). According to a policy algorithm, the tablet manager 130 determines whether the tablet should be transferred to another storage medium. Those skilled in the art will recognize that many different algorithms may be employed. For example, using known caching algorithms, the tablet manager may transfer the tablet to a slower medium based on tablet usage. In that case, a least recently used ("LRU") tablet on a faster medium (e.g., hard disk) may be moved to a slower medium (e.g., tape) to allow the faster medium to make room for tablets that require more frequent access.

Similarly, within the same storage medium (e.g., tape), the tablet manager 130 may move tablets to different locations within the medium based on data usage. For example, the tablet manager may store the most frequently accessed tablets in the same area of the medium (e.g., at the beginning of the tape). Conversely, the tablet manager 130 may store the least frequently accessed (e.g., least recently used) tablets in another area of the medium (e.g., at the end of the tape), which may have a slower access time. Also, the tablet manager may maintain redundant copies of the most frequently accessed tablets in different areas of the tape to allow for faster serial access from different nearby points of the tape.

According to another policy, the tablet manager 130 may move all the tablets from a faster medium to a slower medium if the faster medium fills up with tablets, or may just store the overflow on the other medium.

In another embodiment, the tablet manager 130 can write a tablet containing data, but not data protection, into one storage device, and write the data protection (e.g., the ECC field) separately in tablet format into another storage medium. The tablet manager 130 may keep track of the locations of the data tablet and the associated data protection tablet. Because data protection (e.g., ECC) is only employed when an error is detected (e.g., by using the checksum field in the data tablet), the data protection typically need not be accessed as frequently as the data. Thus, storage efficiency and performance can be improved by storing the data protection tablet in a slower storage unit than the data tablet. Upon detection of an error in a data tablet, the tablet manager 130 can access the corresponding data protection tablet to perform error correction.

In yet another embodiment, the tablet manager 130 can write a tablet into storage without carrying the data protection within the tablet or initially storing the data protection. Instead, the format manager 116 can direct the ECC engine to perform error correction coding "on the fly" as the tablet is transferred from one storage device to another. When the tablet is stored in the second storage device, although the data and other fields are not reformatted, the tablet as a whole can be reformatted to include the ECC information in an ECC field. Alternatively, the tablet could be initially stored with a lower level of data protection to save space in the first storage device, and subjected to further error correction coding during transfer with more ECC information stored in the tablet in the second storage device. This flexibility is especially useful because the first, faster storage device to which data is typically first stored (e.g., cached) usually is of lower capacity than the slower devices to which the data may be transferred.

As indicated above, the invention can be modified to provide for some flexibility in the degree of commonality of the format used by the tablet as it is transferred among different devices. For example, the data formatting (e.g., data, ECC, data protection level, encryption type, compression type, checksum) may stay the same as the tablet is moved among different devices, whereas the formatting of the tablet control fields (e.g., serial number, size, occupancy, life span) may vary.

As an alternative to managing storage according to a policy implemented by the tablet manager 130, the host 101 can send a command to the universal drive 100 to store a file in a specified storage medium. For example, the host command may direct the tablet manager 130 to store a large file to be archived in a slow medium, such as tape. Whether the file is stored according to tablet manager policy or host command, the host can also specify, for example, the life span, the level of security (encryption), the type of compression, the level of data protection (e.g., the number of errors that can be corrected within the tablet), and redundancy level (e.g., the number of copies of the tablet to be maintained on different storage media).

To read a file, the host 101 sends a command specifying the file location according to tablet number and location within the tablet. The tablet manager 130 within the drive uses the tablet inventory to determine the particular storage unit storing the tablet and the location of the tablet within the associated medium. The tablet manager reads the tablet from that location. The format engine 116 directs the compression/encryption engine to decompress and decrypt the tablet, and directs the ECC engine 134 to perform error checking and correction on the decompressed tablet. The tablet formatter 128 finds the file within the tablet, reformats it into file format, and sends it through the policy processor cache 132 and interface processor back to the host.

Using the tablet write and read functions, the policy processor 104 can perform editing functions. To edit a file in a tablet, the host 101 reads the file from the appropriate tablet using the policy processor 104, makes the appropriate modifications to the data file, and sends the edited file back to the policy processor 104. The edited file may be appended to the end of the data in the tablet, assuming that enough free space exists in the tablet. If not, the tablet manager stores the edited file in a different tablet and keeps track of its location.

At this point, an old copy of the file as well as an edited copy exists within the tablet. To increase storage efficiency, the host 101 may execute a "file erase" operation informing the tablet manager 130 which file is obsolete and unnecessary. In response, the tablet manager 130 treats the location of the erased file as empty space, and rewrites the data to close the empty gap, leaving more space at the end of the data, for example. In this manner, the data is repacked within the tablet.

As an alternative, the host 101 may not execute the file erase operation so as to leave the old copy of the file in the tablet, perhaps to keep track of old versions. As an alternative to reading a file and appending the edited version to the end of the data in the tablet, the host 101 may cause the policy processor 104 to read a tablet, deformat it, make the appropriate edits to one or more files within the tablet, reformat the tablet, and rewrite the entire tablet into memory, keeping track of its location, of course.

Based on the foregoing, those skilled in the art will recognize that the universal format storage drive of the invention avoids data fragmentation. Because each tablet may be the same length, any gaps in the storage medium created by erasure of a tablet will be same size as any other tablet that would be stored in that free space. Although dividing data into tablets, with each tablet carrying its own overhead, may reduce storage efficiency, employing a tablet format avoids the need to read and assemble data fragments from different areas of a storage medium to reconstruct a data entity, e.g., a file. Thus, the drive of the invention improves performance.

Although the invention has been described in conjunction with particular embodiments, it will be appreciated that various modifications and alterations may be made by those skilled in the art without departing from the spirit and scope of the invention. The invention is not to be limited by the foregoing illustrative details.

## Claims

1. A universal format storage drive comprising:
a first storage unit for storing a plurality of tablets on a first storage medium;
a second storage unit for storing a plurality of tablets on a second storage medium, wherein the first and second storage units have different access times, the first and second media are of different types, and tablets on the first and second storage media are the same size and have the same format; and
a policy processor for converting data, received from a host, to at least one tablet in a tablet format for storage on either the first or second storage medium.

2. The drive of claim 1, wherein the at least one tablet is stored on either the first or second storage medium depending on the access time of the corresponding storage unit.

3. The drive of claim 2, wherein the host directs storage of the at least one tablet on either the first or second storage medium depending on the access time of the corresponding storage unit.

4. The drive of claim 3, wherein the host sends a command to the policy processor to direct storage of the at least one tablet.

5. The drive of claim 1, wherein a first tablet may be transferred from the first storage unit to the second storage unit and stored on the second storage medium without reformatting the first tablet.

6. A universal format storage drive comprising:
a first storage unit for storing a plurality of tablets on a first storage medium;
a second storage unit for storing a plurality of tablets on a second storage medium, wherein the first and second storage units have different access times, the first and second media are of different types, and tablets on the first and second storage media are the same size and have the same format; and
a policy processor for causing the transfer of a first tablet from the first storage unit to the second storage unit for storage on the second storage medium.

7. The drive of claim 6, wherein the first tablet is transferred to the second storage unit and stored in the second storage medium without reformatting the first tablet.

8. The drive of claim 6, wherein the first storage unit has a faster access time than the second storage unit.

9. The drive of claim 8, wherein the first tablet is a least recently used tablet on the first storage unit.

10. The drive of claim 6, wherein the first storage unit is a disk drive and the first storage medium is a disk, and the second storage unit is a tape drive and the second storage medium is a tape.

11. The drive of claim 10, wherein the first tablet is a least recently used tablet on the disk drive.

12. The drive of claim 6, wherein the first storage medium is a solid state memory and the second storage medium is a disk.

13. The drive of claim 6, wherein, after storage of the first tablet on the second storage medium, the first tablet also remains stored on the first storage medium.

14. The drive of claim 6, wherein the first tablet is, in compressed form, stored on the first storage medium and transferred to the second storage unit for storage on the second storage medium without decompression during any of the storage or transfer operations.

15. The drive of claim 10, the policy processor for causing the tape drive to move a second tablet located at a first region on the tape to a second region of the same size on the tape.

16. The drive of claim 10, the policy processor for causing the tape drive to move at least two infrequently used tablets on the tape to a first region on the tape.

17. The drive of claim 10, wherein each tablet is formatted as a tape, and the tape storing a plurality of tablets emulates a tape library.

18. The drive of claim 10, wherein each tablet is formatted as a tape, and the disk storing a plurality of tablets emulates a tape library.

19. The drive of claim 6, wherein a host communicates data to the policy processor for conversion to at least one tablet in a tablet format, the policy processor for storing the at least one tablet on either the first or second storage medium.

20. The drive of claim 19, wherein the at least one tablet is stored on either the first or second storage medium depending on the access time of the corresponding storage unit.

21. The drive of claim 20, wherein the host directs storage of the at least one tablet on either the first or second storage medium depending on the access time of the corresponding storage unit.

22. The drive of claim 21, wherein the host sends a command to the policy processor to direct storage of the at least one tablet.

23. A universal format storage drive comprising:
a first storage unit for storing a plurality of tablets on a first storage medium;
a second storage unit for storing a plurality of tablets on a second storage medium, wherein the first and second storage units have different access times, the first and second media are of different types, each tablet on the first storage medium has a first size, each tablet on the second storage medium has a second size different from the first size, and tablets on the first storage medium have the same format as tablets on the second storage medium except for level of data protection; and
a policy processor for causing the transfer of a first tablet from the first storage unit to the second storage unit for storage on the second storage medium.

24. The drive of claim 23, wherein the policy processor adds error correction coding to the first tablet for storage on the second storage medium.

25. The drive of claim 24, wherein the first tablet, when stored on the first medium, has no data protection.

26. The drive of claim 23, wherein the first storage unit has a faster access time than the second storage unit.

27. The drive of claim 23, wherein the first storage unit is a disk drive and the first storage medium is a disk, and the second storage unit is a tape drive and the second storage medium is a tape.

28. The drive of claim 23, wherein the first storage medium is a solid state memory and the second storage medium is a disk.

29. The drive of claim 23, wherein a host communicates data to the policy processor for conversion to at least one tablet in a tablet format, the policy processor for storing the at least one tablet on either the first or second storage medium.

30. The drive of claim 29, wherein the at least one tablet is stored on either the first or second storage medium depending on the access time of the corresponding storage unit.

31. The drive of claim 30, wherein the host directs storage of the at least one tablet on either the first or second storage medium depending on the access time of the corresponding storage unit.

32. The drive of claim 31, wherein the host sends a command to the policy processor to direct storage of the at least one tablet.

33. A universal format storage drive comprising:
a first storage unit for storing a plurality of first tablets including data on a first storage medium;
a second storage unit for storing a plurality of second tablets on a second storage medium, wherein the plurality of second tablets include data protection but not data, and the second storage unit has a slower access time than the first storage unit; and
a policy processor for accessing a second tablet corresponding to a first tablet upon detection of an error in the first tablet.

34. The drive of claim 33, wherein the first and second storage units are of different types.

35. The drive of claim 33, wherein each tablet on the first and second storage media has a first size and a second size, respectively, and the first size is larger than the second size.

36. The drive of claim 33, wherein the first storage unit is a disk drive and the first storage medium is a disk, and the second storage unit is a tape drive and the second storage medium is a tape.

37. The drive of claim 33, wherein the first storage medium is a solid state memory and the second storage medium is a disk.

38. A method for storing data in a universal format comprising:
converting data, received from a host, to at least one tablet in a tablet format;
storing the at least one tablet on either a first or a second storage medium using a first or second storage unit, respectively, wherein the first and second storage units have different access times, the first and second media are of different types, and tablets stored on the first and second storage media are the same size and have the same format.

39. The method of claim 38, wherein the at least one tablet is stored on either the first or second storage medium depending on the access time of the corresponding storage unit.

40. The method of claim 39, the host directing storage of the at least one tablet on either the first or second storage medium depending on the access time of the corresponding storage unit.

41. The method of claim 38, wherein a first tablet may be transferred from the first storage unit to the second storage unit and stored on the second storage medium without reformatting the first tablet.

42. A method for storing data in a universal format comprising:
storing a plurality of tablets on a first storage medium using a first storage unit;
storing a plurality of tablets on a second storage medium using a second storage unit, wherein the first and second storage units have different access times, the first and second media are of different types, and tablets on the first and second storage media are the same size and have the same format; and
transferring a first tablet from the first storage unit to the second storage unit for storage on the second storage medium.

43. The method of claim 42, wherein the first tablet is transferred to the second storage unit and stored in the second storage medium without reformatting the first tablet.

44. The method of claim 42, wherein the first storage unit has a faster access time than the second storage unit.

45. The method of claim 44, wherein the first tablet is a least recently used tablet on the first storage unit.

46. The method of claim 42, wherein the first storage unit is a disk drive and the first storage medium is a disk, and the second storage unit is a tape drive and the second storage medium is a tape.

47. The method of claim 46, wherein the first tablet is a least recently used tablet on the disk drive.

48. The method of claim 42, wherein the first storage medium is a solid state memory and the second storage medium is a disk.

49. The method of claim 42, wherein, after storage of the first tablet on the second storage medium, the first tablet also remains stored on the first storage medium.

50. The method of claim 42, wherein the first tablet is, in compressed form, stored on the first storage medium and transferred to the second storage unit for storage on the second storage medium without decompression during any of the storage or transfer operations.

51. The method of claim 46, further comprising moving a second tablet located at a first region on the tape to a second region of the same size on the tape.

52. The method of claim 46, further comprising moving at least two infrequently used tablets on the tape to a first region on the tape.

53. The method of claim 46, wherein each tablet is formatted as a tape, and the tape storing a plurality of tablets emulates a tape library.

54. The method of claim 46, wherein each tablet is formatted as a tape, and the disk storing a plurality of tablets emulates a tape library.

55. The method of claim 42, further comprising:
converting data, received from a host, to at least one tablet in a tablet format;
storing the at least one tablet on either the first or second storage medium using the first or second storage unit, respectively.

56. The method of claim 55, wherein the at least one tablet is stored on either the first or second storage medium depending on the access time of the corresponding storage unit.

57. The method of claim 56, the host directing storage of the at least one tablet on either the first or second storage medium depending on the access time of the corresponding storage unit.

58. A method for storing data in a universal format comprising:
storing a plurality of tablets on a first storage medium using a first storage unit;
storing a plurality of tablets on a second storage medium using a second storage unit, wherein the first and second storage units have different access times, the first and second media are of different types, each tablet on the first storage medium has a first size, each tablet on the second storage medium has a second size different from the first size, and tablets on the first storage medium have the same format as tablets on the second storage medium except for level of data protection; and
transferring a first tablet from the first storage unit to the second storage unit for storage on the second storage medium.

59. The method of claim 58, further comprising adding error correction coding to the first tablet for storage on the second storage medium.

60. The method of claim 59, wherein the first tablet, when stored on the first medium, has no data protection.

61. The method of claim 58, wherein the first storage unit has a faster access time than the second storage unit.

62. The method of claim 58, wherein the first storage unit is a disk drive and the first storage medium is a disk, and the second storage unit is a tape drive and the second storage medium is a tape.

63. The method of claim 58, wherein the first storage medium is a solid state memory and the second storage medium is a disk.

64. The method of claim 58, further comprising:
converting data, received from a host, to at least one tablet in a tablet format;
storing the at least one tablet on either the first or second storage medium using the first or second storage unit, respectively.

65. The method of claim 64, wherein the at least one tablet is stored on either the first or second storage medium depending on the access time of the corresponding storage unit.

66. The method of claim 65, the host directing storage of the at least one tablet on either the first or second storage medium depending on the access time of the corresponding storage unit.

67. A method for storing data in a universal format comprising:
storing a plurality of first tablets including data on a first storage medium using a first storage unit;
storing a plurality of second tablets on a second storage medium using a second storage unit, wherein the plurality of second tablets include data protection but not data, and the second storage unit has a slower access time than the first storage unit; and
accessing a second tablet corresponding to a first tablet upon detection of an error in the first tablet.

68. The method of claim 67, wherein the first and second storage units are of different types.

69. The method of claim 67, wherein each tablet on the first and second storage media has a first size and a second size, respectively, and the first size is larger than the second size.

70. The method of claim 67, wherein the first storage unit is a disk drive and the first storage medium is a disk, and the second storage unit is a tape drive and the second storage medium is a tape.

71. The method of claim 67, wherein the first storage medium is a solid state memory and the second storage medium is a disk.

72. The method of claim 67, further comprising:
converting data, received from a host, to at least one tablet in a tablet format;
storing the at least one tablet on either the first or second storage medium using the first or second storage unit, respectively.

73. The method of claim 72, wherein the at least one tablet is stored on either the first or second storage medium depending on the access time of the corresponding storage unit.

74. The method of claim 73, the host directing storage of the at least one tablet on either the first or second storage medium depending on the access time of the corresponding storage unit.
